# EUROPÄISCHE PATENTSCHRIFT

(11) **EP 0 893 608 B1**
(45) Veröffentlichungstag und Bekanntmachung des Hinweises auf die Patenterteilung: **27.08.2003**
(21) Anmeldenummer: 98107849.6
(22) Anmeldetag: 29.04.1998
(51) Int. Cl.: F15B 13/044, F15B 13/042

(54) **Schiebersteuerventil für die Hochdruckhydraulik**
Spool control valve for high pressure hydraulics
Distributeur de régulation à tiroir pour l'hydraulique à haute pression

(30) Priorität: 25.07.1997 DE 29713296 U
(43) Veröffentlichungstag der Anmeldung: 27.01.1999
(73) Patentinhaber: HAWE Hydraulik GmbH & Co. KG, 81673 München (DE)
(72) Erfinder: Heusser, Martin, Dipl.-Ing., 81245 München (DE)
(74) Vertreter: Grünecker, Kinkeldey, Stockmair & Schwanhäusser Anwaltssozietät

(56) Entgegenhaltungen:
- DE-A- 2 725 917
- DE-A- 3 540 553
- DE-A- 4 231 399
- DE-A- 4 417 587
- PATENT ABSTRACTS OF JAPAN vol. 008, no. 253 (M-339), 20. November 1984 & JP 59 126184 A (KAWASAKI JUKOGYO), 20. Juli 1984
- WANDFLUH AG: "Magnetschieberventile" DATENBLATT NR. 1.4-30D,Juni 1996, Seiten 1/3-3/3, XP002052320 POSTFACH 134, CH-3714 FRUTIGEN

## Beschreibung

Die Erfindung betrifft ein Schiebersteuerventil der im Oberbegriff des Anspruchs 1 angegebenen Art. Ein solches Schieberventil ist z. B. aus JP-A-59 126 184 oder DE-A-3 540 553 bekannt.

Schiebersteuerventile dieser Bauart sind sogenannte Schwarz/Weiß-Schieber-Steuerventile, deren Schieberkolben durch Fedem in einer Stellung zentriert und durch beiderseitige Betätigungsantriebe, z.B. Schaltmagneten, direkt in die Steuer-Endstellungen verstellt wird. Im Unterschied zu sogenannten Proportional-Schiebersteuerventilen, bei denen der jeweilige Verstellhub von der Bestromung von Proportionalmagneten abhängt und Zwischenstellungen des Schieberkolbens möglich sind, sind Schwarz/Weiß-Schiebersteuerventile mittels einfacher Taster oder Schalter betätigbar, die z.B. die Bestromung des jeweiligen Schaltmagneten ein- und abschalten. Magnet-Schiebersteuerventile der Schwarz/Weiß-Bauweise schalten sehr schnell. Dies kann zu Schaltschlägen im hydraulischen System führen, welche mechanischen Verschleiß sowie eine negative Beeinflussung der Arbeitsweise bewirken. Die Schaltzeit kann z.B. 50 Millisekunden oder weniger betragen.

Bei einem aus JP-A-59 126 184 bekannten Schiebersteuerventil erfolgt die Verstellung des federzentrierten Schieberkolbens durch hydraulische Vorsteuerung. In den Federkammem an beiden Enden des Schieberkolbens sind Rückschlagventile vorgesehen, die unter bestimmten Voraussetzungen Teile der Federkammern voneinander trennen und kleine Dämpfdrosseln bei der hydraulischen Vorsteuerung zur Wirkung kommen lassen. Da der Einlass zum Ventilsitz jedes Nachsaugrückschlagventils als Drosselbohrung ausgebildet ist, wird bei einer Vergrößerung der Federkammer Druckmittel in die innere Federkammer über die kleine Dämpfdrossel und den drosselnden Einlass des Nachsaug-Rückschlagventils aus der äußeren Federkammer nachgesaugt.

Bei dem aus DE-A-35 40 553 bekannten Schiebersteuerventil sind Rückschlagventile im Schieberkolben dazu vorgesehen, um bei einem Staudruckanstieg einen zusätzlichen Druckimpuls auf das in Versteitrichtung hintenliegende Stimende des Kolbenschiebers auszuüben und durch die Strömungsdynamik bedingte Hemmkräfte zu kompensieren. Bei Vergrößerung der jeweiligen Verdrängungskammer muss bei einer Ausführungsform Druckmittel über eine beim Schließelement des Rückschlagventils angeordnete Drosselstelle und ein einstellbares Drosselventil nachgesaugt werden, und muss bei der anderen Ausführungsform Druckmittel nur über ein in einem die beiden Verdrängungskammem verbindenden Kanal angeordnetes Drosselventil nachgesaugt werden. Bei mehreren aufeinanderfolgenden Umsteuervorgängen kann es zu einer Unterversorgung in einer Verdrängungskammer kommen, aus der eine Veränderung des gewünschten Dämpfungsverhaltens resultiert.

Weiterer Stand der Technik ist enthalten in DE-44 17 587, DE-42 31 399, DE-27 25 917 und einem Datenblatt Nr. 1.4-30D, der Firma Wandfluh AG, Schweiz, "Magnetschieberventile" vom Juni 1996.

Der Erfindung liegt die Aufgabe zugrunde, ein Schiebersteuerventil der eingangs genannten Art zu schaffen, bei dem baulich einfach die Dämpfung der Umsteuerbewegungen auch bei kurzzeitig aufeinanderfolgenden Umsteuerbewegungen stets und auf gleiche Weise wirksam ist.

Die gestellte Aufgabe wird erfindungsgemäß mit den Merkmalen des Anspruchs 1 gelöst.

Durch die mit den Schieberkolben verstellbare Drosselstrecke und das Nachsaug-Rückschlagventil zeigt sich trotz verringerten baulichen Aufwandes, dass unter Zuhilfenahme der Strömungsdynamik und der Bewegungsdynamik des Schieberkolbens selbst bei zeitlich kurz aufeinanderfolgenden Umsteuerbewegungen jeweils eine gleichartige Dämpfung stattfindet. Es lässt sich problemlos die durch den Magneten bestimmte Schaltzeit von z.B. nur 50 Millisekunden oder weniger auf 200 bis 300 Millisekunden oder mehr ausdehnen. Obwohl der Grund hierfür nicht vollständig bekannt ist, dürfte das Nachsaug-Rückschlagventil vorübergehende Abfälle oder Änderungen der Dämpfungsfunktion dadurch verhindern, dass wegen der Dynamik bei den vom Nachsaug-Rückschlagventil und der Drossel mitgemachten Verstellbewegungen des Schieberkolbens für einen neuerlichen Dämpfungsvorgang benötigtes Druckmittel im Verdrängungsraum sofort wieder in ausreichendem Maß zur Verfügung steht, und auch stets mit in etwa demselben Druck, z.B. dem Rücklaufdruck, so dass die Drosselstrecke gleich wieder die gleiche Dämpfungswirkung erbringen kann. Dabei sind für jedes Schieberkolbenende wenigstens eine Drosselstrecke und ein Nachsaug-Rückschlagventil vorgesehen, um in jeder Richtung zu dämpfen und auch um die Dämpfungswirkung individuell einstellen zu können.

Besonders zweckmäßig ist gemäß Anspruch 2 die Drosselstrecke dort vorgesehen, wo ohnedies aufgrund der Schieberpassung eine gute Abdichtung vorliegt und deshalb bereits kleinste Verstellbewegungen des Schieberkolbens zum Ansprechen der Dämpfung führen. Die Schieberdichtheit von nur wenigen Mikron wirkt bei der rasch beginnenden Verstellbewegung wie leckagefrei dicht, so dass die Drosselstrecke exakt in der vorbestimmten Weise zur Wirkung kommt.

Alternativ wird gemäß Anspruch 3 die Drosselstrecke zwischen dem Innenkanal des Schieberkolbens und seinem Außenumfang bzw. einem mit dem Rücklaufanschluss verbundenen Einstich angeordnet. Es wird so ein relativ großer Verdrängungsraum definiert, und zwar auch durch die Position des Nachsaug-Rückschlagventils im Innenkanal, so daß eine relativ große Druckmittelmenge für die Dämpfungsfunktion zur Verfügung steht, die sich auch bei häufigen Umsteuerungen nicht verbraucht, sondern stets durch das Nachsaug-Rückschlagventil ergänzt wird.

Gemäß Anspruch 4 wird zumindest die Drosselstrecke im Schaltmagneten angeordnet, und zwar entweder im Magnetanker oder im Luftspalt, wobei gegebenenfalls sogar der Luftspalt die Drosselstrecke bildet. Der Verdrängungsraum ist über das Nachsaug-Rückschlagventil stets gefüllt und mit dem gewünschten Druck beaufschlagt. Da im Regelfall der Luftspalt im Schaltmagneten relativ groß ist, wird der Anordnung der Drosselstrecke zwischen dem Schieberkolben und der Gehäusebohrung, gegebenenfalls in der Gehäusebohrung oder vom Innenkanal des Schieberkolbens zu dessen Außenumfang der Vorzug gegeben, weil das verdrängte Druckmittel dann ohne spürbare Leckage gedrosselt werden kann, und auch in unmittelbarer Nachbarschaft zum Nachsaug-Rückschlagventil, was für das gleichbleibende Ansprechverhalten auch bei kurzzeitig aufeinanderfolgenden Umsteuerungen wichtig ist.

Gemäß Anspruch 5 lässt sich die Dämpfung auf baulich einfache und kostengünstige Weise erzielen, wobei bewährte Gehäusekonstruktionen des Schiebersteuerventils unangetastet bleiben. Der Innenkanal im Schieberkolben ist vorgesehen, um die Drücke an beiden Schieberkolbenenden einander anzugleichen bzw. unterschiedliche Drücke in den Rücklaufanschlüssen zu vermeiden. Im Innenkanal steht stets genug Druckmittel zum Ergänzen zur Verfügung. Mit dem Kunstgriff, das Schließelement mit dem Innenkanal einen kleineren Querschnitt begrenzen zu lassen als den Durchgangsquerschnitt des Ventilsitzes, lässt sich ein federloses Rückschlagventil verwenden, das unmittelbar und zuverlässig anspricht und nicht durch eine Schließfeder beeinträchtigt wird.

Gemäß Anspruch 6 wird der viskositätsunabhängige Drosseleffekt einer langen Bohrung eingesetzt, um bei unterschiedlichen Arbeitstemperaturen des Druckmittels stets dieselbe Drosselwirkung zu erzielen.

Anhand der Zeichnung werden Ausführungsformen des Erfindungsgegenstandes erläutert. Es zeigen:
- Fig. 1: einen Längsschnitt durch ein Schiebersteuerventil,
- Fig. 2: eine Detailvariante in einem Querschnitt durch den Schieberkolben und die Gehäusebohrung, und
- Fig. 3: schematisch eine weitere Ausführungsvariante.

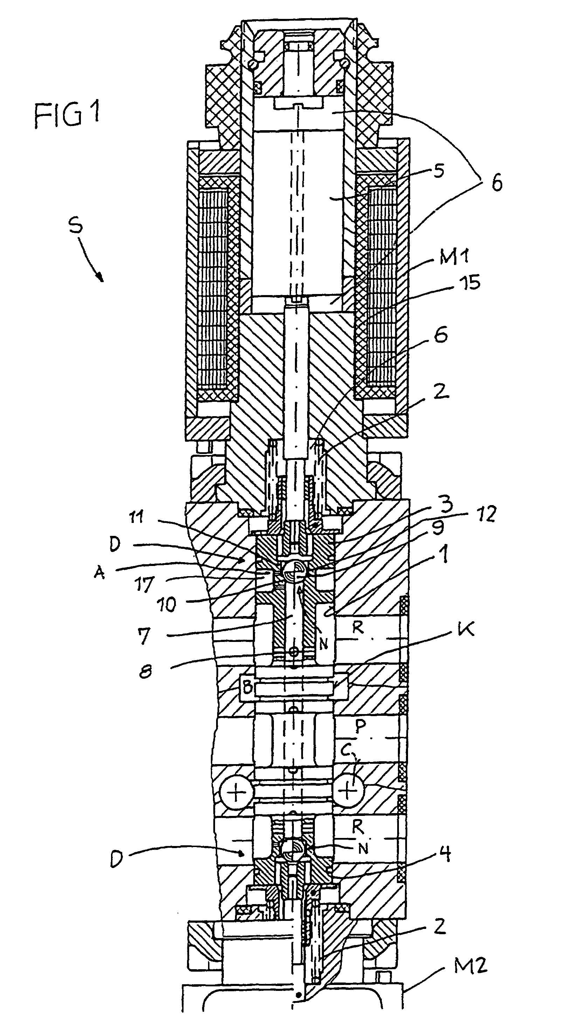

Ein Schiebersteuerventil S ist in Fig. 1 als 4/3-Wegeventil mit doppelseitiger Magnetbetätigung ausgebildet. In einer Gehäusebohrung 1 ist ein Schieberkolben K abgedichtet verschieblich angeordnet, der über seine Länge durch Dichtzonen voneinander getrennte Einstiche zur Strömungsführung aufweist. Nahe den beiden Enden des Schieberkolbens K sind die Dichtzonen 3, 4 hervorgehoben, in denen der Umfang des Schieberkolbens K mit der Wand der Gehäusebohrung 1 mit der üblichen Schieberpassung von nur wenigen Mikron schieberdicht zusammenwirkt. In der Gehäusebohrung sind ein Druckanschluß P, axial getrennt je ein Verbraucheranschluß C B und axial getrennt je ein Rücklaufanschluß R vorgesehen. In der gezeigten Mittelstellung, die durch Federn 2 eingestellt ist, trennt der Schieberkolben K den Druckanschluß P von den beiden Verbraucheranschlüssen C, B, und sind auch die Rücklaufanschlüsse R von den Verbraucheranschlüssen C, B getrennt. Wird der Schieberkolben K in Fig. 1 nach unten in seine erste Steuerstellung verstellt, dann verbindet er den Druckanschluß P mit dem Verbraucheranschluß C, während der Verbraucheranschluß B mit dem oberen Rücklaufanschluß R verbunden ist. Bei einer Verstellung des Schieberkolbens K aus der Mittelstellung nach oben wird hingegen der Verbraucheranschluß B mit dem Druckanschluß B verbunden, während der Verbraucheranschluß C mit dem unteren Rücklaufanschluß R verbunden ist. In einem im Schieberkolben K geformten Einstich 17 angrenzend an die obere Dichtzone 3 herrscht der Druck des Rücklaufanschlusses R.

Die Betätigungsantriebe sind Schaltmagneten M1 und M2. In einer stationären Magnetkomponente 15 ist ein Magnetanker 5 verschieblich, der über einen Stößel 14 auf den Schieberkolben K einwirkt. Druckmittel zumindest mit dem Druck im Rücklaufanschluß R ist in einem Verdrängungsraum 6 enthalten, der im Inneren des Magneten M1 und zwischen dem Ende des Schieberkolbens K und dem Magneten M1 begrenzt wird. Dieselben Verhältnisse können beim unteren, nicht im Detail gezeigten Schaltmagneten M2 vorliegen.

Der Schieberkolben K enthält einen längsdurchgehenden Innenkanal 7, der über Stichbohrungen 8 mit den Rücklaufanschlüssen R verbunden ist. Zumindest bei einem Schieberkolbenende, vorzugsweise bei beiden Schieberkolbenenden, ist eine Dämpfvorrichtung D vorgesehen, die bei einer Verstellbewegung des Schieberkolbens in einer vorbestimmten Richtung zur Wirkung kommt, um die Umsteuerbewegung weich ablaufen zu lassen, d.h., die Umsteuerbewegung über anstelle der bei solchen Schaltmagneten üblichen Schaltzeit von ca. 50 Millisekunden oder weniger auf 200 bis 300 Millisekunden auszudehnen bzw. sogar noch länger.

Die beim in Fig. 1 oberen Ende des Schieberkolbens K vorgesehene Dämpfvorrichtung D weist wenigstens eine parallele Drosselstrecke A in Form einer langen Bohrung sowie ein im Innenkanal 7 angeordnetes Nachsaug-Rückschlagventil N auf. Das Nachsaug-Rückschlagventil N besteht aus einem in den Innenkanal 7 geformten Ventilsitz 10 und einer Kugel 9, die in einem Abschnitt 11 des Innenkanals 7 frei beweglich ist. Der zwischen dem Außenumfang der Kugel 9 und dem Abschnitt 11 begrenzte Durchgangsquerschnitt für das Druckmittel ist kleiner als der Durchgangsquerschnitt des Ventilsitzes 10. Dadurch kann das Nachsaug-Rückschlagventil N ohne Schließfeder ausgelegt werden, so daß es bereits auf kleinste Druckänderungen bzw. Druckmittelbewegungen anspricht und leicht öffnet bzw. schließt. Das Nachsaug-Rückschlagventil N sperrt in Strömungsrichtung vom Verdrängungsraum 6 in den Innenkanal 7 und öffnet in der entgegengesetzten Richtung. Die Drosselstrecke A ist an der dem Verdrängungsraum zugewandten Seite des Ventilsitzes 10 angeordnet und umgeht das sperrende Nachsaug-Rückschlagventil N.

Wird der Schieberkolben K in Fig. 1 durch Betätigung des unteren Schaltmagneten M2 nach oben verschoben, dann verringert sich die Größe des Verdrängungsraumes 6. Das Druckmittel im Verdrängungsraum 6, das zumindest unter dem Druck im Rücklaufanschluß R steht, wird zum Teil verdrängt. Der verdrängte Teil muß die Drosselstrecke A passieren, wobei gleichzeitig das Nachsaug-Rückschlagventil N in seiner Sperrstellung gehalten wird. Es kommt zu einer Dämpfung der Bewegung des Schieberkolbens. Wird der untere Schaltmagnet M2 entregt bzw. der obere Schaltmagnet M1 bestromt, dann öffnet das obere Nachsaug-Rückschlagventil N, um wieder den im Innenkanal 7 herrschenden Druck im Verdrängungsraum 6 einstellen bzw. eine hierfür erforderliche Menge des Druckmittels in den Verdrängungsraum 6 nachsaugen bzw. einströmen zu lassen. Sofern auch beim unteren Ende des Schieberkolbens K eine Dämpfvorrichtung P gleicher Weise vorgesehen ist, wird bei einer Bestromung des oberen Schaltmagneten M1 auch diese Umsteuerbewegung gedämpft.

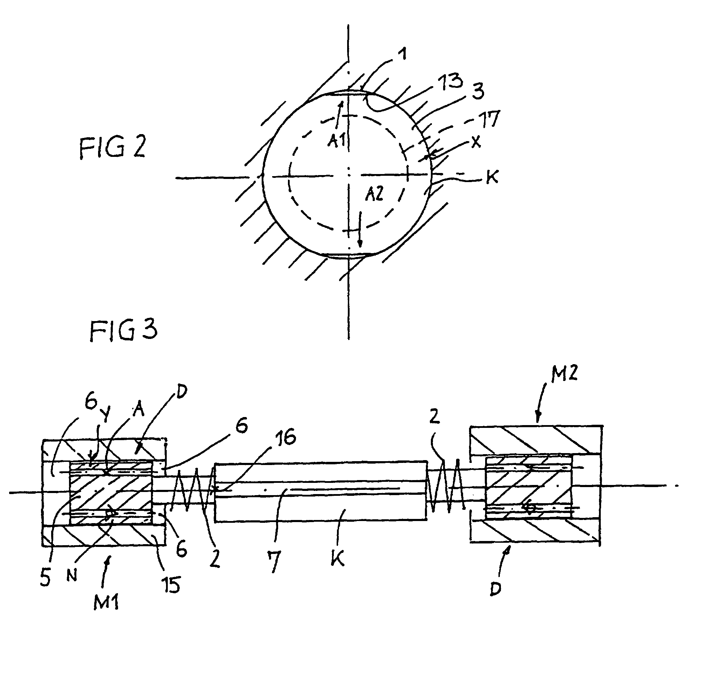

Es können jeweils mehrere Drosselstrecken A vorgesehen sein, oder es kann die Drosselstrecke A (Fig. 2) anders als in Fig. 1 ausgebildet werden. Zu Fig. 2 (Querschnitt durch den Schieberkolben K in der Dichtzone 3) ist wenigstens eine Drosselstrecke A1 (oder auch eine zweite Drosselstrecke A2) durch Abschleifen einer Abflachung 13 vom zylindrischen Außenumfang in der Dichtzone 3 gebildet. In der Dichtzone 3 hat über den verbleibenden Umfangsbereich der Schieberkolben K eine Schieberpassung X von nur wenigen Mikron mit der Innenwand der Gehäusebohrung 1, so daß die Drosselung des verdrängten Druckmittels nur in der Drosselstrecke A1 bzw. A1 + A2 stattfindet. Die Drosselstrecke in diesem Bereich vorzusehen, ist zweckmäßig, weil hier bei raschen Umsteuerbewegungen praktisch leckagefreie Dichtheit gegeben ist.

In Fig. 3 ist eine andere Ausführungsform der Dämpfungsvorrichtung D für jedes Schieberkolbenende gezeigt. Der Verdrängungsraum 6 kann wie in Fig. 1 ausgebildet sein. Die Drosselstrecke A ist im Magnetanker 5 enthalten, wie auch das Nachsaug-Rückschlagventil N. Da zwischen dem Magnetanker 5 und der stationären Magnetkomponente 15 üblicherweise ein Luftspalt Y vorliegt, der relativ groß bemessen sein kann, könnte auch der Luftspalt Y als die Drosselstrecke A benutzt werden. Femer ist auch in Fig. 3 der Innenkanal 7 zum Druckausgleich im Schieberkolben K vorgesehen, und dienen die Federn 2 zum Zentrieren des Schieberkolbens K. Der Stößel 14, über den der Schaltmagnet M1 (bzw. M2) den Schieberkolben K betätigt, sollte zweckmäßig (wie bei 16 angedeutet) mit dem Schieberkolben K und dem Magnetanker 5 gekoppelt sein.

Die Drosselstrecken an beiden Schieberkolbenenden könnten unterschiedlich gestaltet oder in ihrer Drosselwirkung unterschiedlich ausgelegt sein. Ferner ist es denkbar, die Drosselwirkung der jeweiligen Drosselstrecke verstellbar auszulegen, z.B. mittels einer Drosselschraube.

## Patentansprüche

1. Schiebersteuerventil für die Hochdruckhydraulik, insbesondere Mehrwege- und Mehrstellungs-Schiebersteuerventil, mit einem durch beiderseitige Betätigungsantriebe zwischen mindestens zwei definierten Steuerstellungen verstellbaren Schieberkolben (K), der in einer Gehäusebohrung (1) wahlweise Verbindungen zwischen einem Druckanschluss (P), wenigstens einem Verbraucheranschluss (C, B) und wenigstens einem Rücklaufanschluss (R) herstellt oder solche Verbindungen unterbricht, wobei an wenigstens einem axialen Ende des Schieberkolbens (K) und gegebenenfalls in dem dort angeordneten Betätigungsantrieb in einem Verdrängungsraum (6) Druckmittel mit zumindest dem Druck im Rücklaufanschluss (R) vorgesehen sind, und wobei wenigstens eine Drosselstrecke (A, A1, A2) für beim Verstellen des Schieberkolbens verdrängtes Druckmittel und ein zur Drosselstrecke paralleles Nachsaug-Rückschlagventil (N) mit einem Ventilsitz (10) und einem Schließelement (9) auf der dem Verdrängungsraum (6) zugewandten Seite des Ventilsitzes (10) vorgesehen sind und das Nachsaug-Rückschlagventil (N) bei Druckerhöhung im Verdrängungsraum durch die Verstellbewegung des Schieberkolbens (K) sperrt und bei entgegengesetzter Verstellbewegung des Schieberkolbens eine Nachsaugeverbindung zum Verdrängungsraum (6) freigibt, **dadurch gekennzeichnet, dass** der Schieberkolben (K) zwischen beiden Enden einen längsdurchgehenden Innenkanal (7) aufweist, der außerhalb des jeweiligen Verdrängungsraums (6) mit wenigstens einem Rücklaufanschluss (R) verbunden ist, dass die Drosselstrecke und das zur Drosselstrecke parallele Nachsaug-Rückschlagventil im Schieberkolben oder in einer mit dem Schieberkolben verstellbaren Komponente des Betätigungsantriebs für zumindest ein Schieberkolbenende vorgesehen sind und dass das Nachsaug-Rückschlagventil (N) entweder im Innenkanal (7) angeordnet ist oder mit dem Innenkanal (7) in freier Strömungsverbindung steht.

2. Schiebersteuerventil nach Anspruch 1, **dadurch gekennzeichnet, dass** die mit dem Rücklaufanschluss (R) verbundene Drosselstrecke (A1, A2) außen am Schieberkolben (K) bei der Wand der Gehäusebohrung (1) vorgesehen ist, vorzugsweise als vom zylindrischen Außenumfang des Dichtabschnitts (3) abgeschliffene Abflachung (13) in einem Dichtabschnitt (3, 4) des Schieberkolbens (K).

3. Schiebersteuerventil nach Anspruch 1, **dadurch gekennzeichnet, dass** im Innenkanal (7) für jede Verstellrichtung des Schieberkolbens (K) ein Nachsaug-Rückschlagventil (N) angeordnet ist, und dass die jeweilige Drosselstrecke (A) zwischen dem Innenkanal (7) und einem mit dem Rücklaufanschluss (R) verbundenen Einstieg (17) des Schieberkolbens (K) angeordnet ist.

4. Schiebersteuerventil nach Anspruch 1, **dadurch gekennzeichnet, dass** der Betätigungsantrieb ein Schaltmagnet (M1, M2) mit einem Magnetanker (5) ist, und dass die Drosselstrecke (A) und das Nachsaug-Rückschlagventil (N) im Magnetanker (5) angeordnet sind, wobei, vorzugsweise, die Drosselstrecke (A) durch einen Luftspalt (Y) zwischen dem Magnetanker (5) und einer stationären Magnetkomponente (15) gebildet ist.

5. Schiebersteuerventil nach Anspruch 3, **dadurch gekennzeichnet, dass** das im Innenkanal (7) angeordnete Nachsaug-Rückschlagventil (N) als Schließelement (9) eine freibewegliche Kugel aufweist, und dass die Kugel auf der Verdrängungsdruckseite des Ventilsitzes (10) mit einer Innenwand (11) des Innenkanals (7) einen kleineren Querschnitt begrenzt als den Durchgangsquerschnitt des Ventilsitzes (10).

6. Schiebersteuerventil nach wenigstens einem der vorhergehenden Ansprüche, **dadurch gekennzeichnet, dass** die Drosselstrecke (A) wenigstens eine lange, viskositätsunabhängige Bohrung ist.

## Claims

1. Slide control valve for high-pressure hydraulics, in particular multi-way and multi-position slide control valve, with a slide piston (K) which is adjustable between at least two defined control positions by means of actuating drives located on both sides and which in a housing bore (1) selectively makes connections between a pressure connection (P), at least one consumer connection (C, B) and at least one return connection (R) or breaks such connections, pressure media with at least the pressure in the return connection (R) being provided at at least one axial end of the slide piston (K) and, if appropriate, in the actuating drive arranged there, in a displacement space (6), and at least one throttle stage (A, A1, A2) being provided for pressure medium displaced during the adjustment of the slide piston and a repriming non-return valve (N) parallel to the throttle stage and with a valve seat (10) and with a closing element (9) being provided on that side of the valve seat (10) which faces the displacement space (6), and, in the event of a pressure rise in the displacement space, as a result of the adjusting movement of the slide piston (K), the repriming non-return valve (N) blocking and, in the event of an opposite adjusting movement of the slide piston, opening a repriming connection to the displacement space (6), **characterized in that** the slide piston (K) has between the two ends a longitudinally continuous inner duct (7) which is connected to at least one return connection (R) outside the respective displacement space (6), **in that** the throttle stage and the repriming non-return valve parallel to the throttle stage are provided in the slide piston or in a component, adjustable by the slide piston, of the actuating drive for at least one slide-piston end, and **in that** the repriming non-return valve (N) either is arranged in the inner duct (7) or is freely flow-connected to the inner duct (7).

2. Slide control valve according to Claim 1, **characterized in that** the throttle stage (A1, A2) connected to the return connection (R) is provided on the outside of the slide piston (K) near the wall of the housing bore (1), preferably as a flattening (13) in a sealing portion (3, 4) of the slide piston (K), the said flattening being ground away from the cylindrical outer circumference of the sealing portion (3).

3. Slide control valve according to Claim 1, **characterized in that** a repriming non-return valve (N) is arranged in the inner duct (7) for each adjusting direction of the slide piston (K), and **in that** the respective throttle stage (A) is arranged between the inner duct (7) and an entry (17) of the slide piston (K), the said entry being connected to the return connection (R).

4. Slide control valve according to Claim 1, **characterized in that** the actuating drive is a switching magnet (M1, M2) with a magnet armature (5), and **in that** the throttle stage (A) and the repriming non-return valve (N) are arranged in the magnet armature (5), preferably the throttle stage (A) being formed by an air gap (Y) between the magnet armature (5) and a stationary magnet component (15).

5. Slide control valve according to Claim 3, **characterized in that** the repriming non-return valve (N) arranged in the inner duct (7) has a freely movable ball as a closing element (9), and **in that**, on the displacement pressure side of the valve seat (10), the ball delimits with an inner wall (11) of the inner duct (7) a smaller cross section than the passage cross section of the valve seat (10).

6. Slide control valve according to at least one of the preceding claims, **characterized in that** the throttle stage (A) is at least one long bore independent of viscosity.

## Revendications

1. Distributeur de régulation à tiroir pour l'hydraulique à haute pression, en particulier distributeur de régulation à tiroir à plusieurs voies et à plusieurs positions, avec un piston de tiroir (K) déplaçable au moyen de mécanismes d'actionnement disposés sur les deux côtés, entre au moins deux positions de régulation définies, qui au choix, dans un alésage de boîtier (1), établit des liaisons entre un raccordement de pression (P), au moins un raccordement de récepteur (C, B) et au moins un raccordement de retour (R) ou interrompt de telles liaisons, des agents de pression avec au moins la pression du raccordement de retour (R) étant prévus dans un compartiment de déplacement (6) sur au moins une extrémité axiale du piston de tiroir (K) et le cas échéant dans le mécanisme d'actionnement qui y est disposé et au moins un trajet d'étranglement (A, A1, A2) pour l'agent de pression déplacé lors du changement de position du piston de tiroir et une soupape antiretour d'aspiration (N) parallèle au trajet d'étranglement, avec un siège de soupape (10) et un élément de fermeture (9) sur le côté du siège de soupape (10) tourné vers le compartiment de déplacement (6), étant prévus et la soupape antiretour d'aspiration (N) barrant, lors de l'augmentation de la pression dans le compartiment de déplacement suite au changement de position du piston de tiroir (K), et libérant, lorsque le piston de tiroir se déplace dans le sens opposé, une conduite d'aspiration en direction du compartiment de déplacement (6), **caractérisé en ce que** le piston de tiroir (K) est pourvu d'une canalisation intérieure traversante longitudinalement (7) entre ses deux extrémités, qui est reliée à l'extérieur de chacun des compartiments de déplacement (6) avec au moins un raccordement de retour (R), et que le trajet d'étranglement et la soupape antiretour d'aspiration parallèle au trajet d'étranglement sont prévus dans le piston de tiroir ou dans un composant du mécanisme d'actionnement déplaçable avec le piston de tiroir pour au moins une extrémité du piston de tiroir, et que la soupape antiretour d'aspiration (N), soit est disposée dans la canalisation intérieure (7), soit est en liaison d'écoulement libre avec la canalisation intérieure (7).

2. Distributeur de régulation à tiroir selon la revendication 1, **caractérisé en ce que** le trajet d'étranglement (A1, A2) relié au raccordement de retour (R) est prévu à l'extérieur sur le piston de tiroir (K) près de la paroi de l'alésage de boîtier (1), de préférence en tant que surface abrasée (13) de la périphérie extérieure cylindrique de la section d'étanchéité (3) dans une section d'étanchéité (3,4) du piston de tiroir (K).

3. Distributeur de régulation à tiroir selon la revendication 1, **caractérisé en ce qu'**une soupape antiretour d'aspiration (N) est disposée pour chaque sens de positionnement du piston de tiroir (K) dans la canalisation intérieure (7), et que chacun des trajets d'étranglement (A) est disposé entre la canalisation intérieure (7) et une entrée (17) du piston de tiroir (K) reliée au raccordement de retour (R).

4. Distributeur de régulation à tiroir selon la revendication 1, **caractérisé en ce que** le mécanisme d'actionnement est un aimant de commutation (M1, M2) avec une armature d'aimant (5), et que le trajet d'étranglement (A) et la soupape antiretour d'aspiration (N) sont installés dans l'armature d'aimant (5), le trajet d'étranglement (A) étant de préférence formé par un entrefer (Y) entre l'armature d'aimant (5) et un composant d'aimant stationnaire (15).

5. Distributeur de régulation à tiroir selon la revendication 3, **caractérisé en ce que** la soupape antiretour d'aspiration (N) disposée dans la canalisation intérieure (7) est dotée d'une sphère libre de mouvement en tant qu'élément de fermeture (9), et que la sphère délimite avec une paroi intérieure (11) de la canalisation intérieure (7) sur le côté de pression de déplacement du siège de soupape (10) une section plus petite que la section de passage du siège de soupape (10).

6. Distributeur de régulation à tiroir selon au moins l'une des revendications précédentes, **caractérisé en ce que** le trajet d'étranglement (A) est au moins un alésage long indépendant de la viscosité.
